# EUROPÄISCHE PATENTSCHRIFT

(11) **EP 1 836 852 B1**
(45) Veröffentlichungstag und Bekanntmachung des Hinweises auf die Patenterteilung: **16.07.2014**
(21) Anmeldenummer: 05816211.6
(22) Anmeldetag: 13.12.2005
(51) Int. Cl.: H04N 7/24, H04L 12/28

(54) **VERFAHREN UND VORRICHTUNGEN ZUR ÜBERTRAGUNG VON SKALIERBAREN DATEN**
METHODS AND DEVICES FOR THE TRANSMISSION OF SCALABLE DATA
PROCEDE ET DISPOSITIFS DE TRANSMISSION DE DONNEES EVOLUTIVES

(30) Priorität: 11.01.2005 DE 102005001286
(43) Veröffentlichungstag der Anmeldung: 26.09.2007
(73) Patentinhaber: Siemens Aktiengesellschaft, 80333 München (DE)
(72) Erfinder: AMON, Peter, 81675 München (DE); HUTTER, Andreas, 81673 München (DE); RATHGEN, Thomas, 98693 Ilmenau (DE)
(86) Internationale Anmeldenummer: PCT/EP2005/056737
(87) Internationale Veröffentlichungsnummer: WO 2006/074848

(56) Entgegenhaltungen:
- FRANCOIS E.; VIERON J.; BOISSON G.: "MPEG SVC: why a new video standard?" BROADBAND EUROPE, [Online] 8. Dezember 2004 (2004-12-08), Seiten 1-5, XP002368921 Gefunden im Internet: URL:https://medicongress.be/UploadBroad/Se ssion%2010/Paper%2010-02.pdf> [gefunden am 2006-02-15]
- ZGALJIC T.; SPRLJAN N.; IZQUIERDO E.: "BITSTREAM SYNTAX DESCRIPTION BASED ADAPTATION OF SCALABLE VIDEO" PROC. EUROPEAN WORKSHOP ON THE INTEGRATION OF KNOWLEDGE, SEMANTIC AND DIGITAL MEDIA TECHNOLOGIES (EWIMT), [Online] 30. November 2005 (2005-11-30), Seiten 1-6, XP002368922 London Gefunden im Internet: URL:http://www.iee.org/oncomms/pn/visualin formation/ewimt2005_0073.pdf> [gefunden am 2006-02-16]
- SPRLJAN N.; MRAK M.; ABHAYARATNE G. C. K.; IZQUIERDO E.: "A SCALABLE CODING FRAMEWORK FOR EFFICIENT VIDEO ADAPTATION" WIAMIS 2005, [Online] 13. April 2005 (2005-04-13), Seiten 1-4, XP002368923 Montreux, Switzerland Gefunden im Internet: URL:http://www.cost292.org/pubs/wiamis05/c r1076.pdf> [gefunden am 2006-02-16]
- SCHWARZ H.; MARPE D.; WIEGAND T: "MCTF AND SCALABILITY EXTENSION OF H. 264/AVC" PROC. PCS'04, [Online] 15. Dezember 2004 (2004-12-15), Seiten 1-6, XP002368924 San Francisco, CA, USA Gefunden im Internet: URL:http://ip.hhi.de/imagecom_G1/savce/doc uments/PCS2004.pdf> [gefunden am 2006-02-15] in der Anmeldung erwähnt
- MUKHERJEE D ET AL: "Structured Scalable Meta-formats (SSM) version 1.0 for content agnostic Digital Item Adaptation", INTERNET CITATION, December 2002 (2002-12), XP002321533, Retrieved from the Internet: URL:http://www.inventoland.net/docs/mpeg/6 4/SSM1.5.pdf [retrieved on 2005-03-16]
- DUDEN: 'gruppieren' INTERNET CITATION, [Online] Seiten 1 - 3 Dudenverlag Gefunden im Internet: <URL:http://www.duden.de/rechtschreibung/gr uppieren> [gefunden am 2013-06-26]
- DEBARGHA MUKHERJEE, AMIR SAID: 'Structured Content Independent Scalable Meta-formats (SCISM) for Media Type Agnostic Transcoding' INTERNET CITATION, [Online] 2002, Seiten 1 - 26 Hewlett-Packard Company Gefunden im Internet: <URL:http://www.hpl.hp.com/techreports/2002 /HPL-2002-166R1.pdf?jumpid=reg_R1002_USEN> [gefunden am 2013-07-01]

## Beschreibung

Die Erfindung betrifft Verfahren und Vorrichtungen zur Übertragung von Informationen, bei dem Basis-Informationen und die Basis-Informationen ergänzende Informationen gesendet werden.

In Kommunikationssystemen werden Nachrichten zwischen Sender und Empfänger übertragen. Ein spezielles Beispiel für Kommunikationssysteme sind Funkkommunikationssysteme. Hier werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Funkeinrichtungen wie Basisstationen oder Funkzugangspunkte handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich.

Bei der Übertragung von skalierbaren Daten wird die Basisinformation übertragen, und zusätzlich die Basisinformation ergänzende Informationen. Skalierbare Daten weisen somit die Eigenschaft auf, dass sie in verminderter Qualität bei dem Empfänger vorliegen können, indem der Empfänger nur die Basisinformation oder die Basisinformation und einen Teil der ergänzenden Informationen dekodiert, und nicht die Basisinformation und alle ergänzenden Informationen. Daten, welche an mehrere Teilnehmer gleichzeitig versendet werden, können als skalierbare Informationen von dem Sender in bestmöglicher Qualität, d.h. als Basisinformation und ergänzende Informationen, versendet werden. Bei der Verteilung der Daten im Kommunikationsnetzwerk an die verschiedenen Empfänger kann eine Adaption/Skalierung der Daten derart durchgeführt werden, dass verschiedene Teile der ergänzenden Informationen an die verschiedenen Empfänger weitergeleitet werden, so dass nur die vom jeweiligen Empfänger benötigten oder gewünschten ergänzenden Informationen übertragen werden. Dies erweist sich aufgrund der knappen Übertragungsressourcen insbesondere bei Funkkommunikationssystemen als vorteilhaft. Die Adaption/Skalierung kann auch von einem Endgerät durchgeführt werden, welches entscheidet, nur einen Teil der ergänzenden Informationen zu dekodieren.

In dem Artikel "Structured Content Independent Scalable Meta-formats (SCISM) for Media Type Agnostic Transcoding" von Debargha Mukherjee und Amir Said (veröffentlicht 2002) wird ein System und Verfahren zur Übertragung von skalierbaren Daten beschrieben, bei dem in einem Paket-Header Informationen über die Position der einzelnen Datenelemente (Atome) im Datenstrom als auch über die Attribute der einzelnen Datenelemente gesendet werden. Die Datenelemente können in dem Datenstrom auf verschiedene Weise gruppiert werden.

Der Erfindung liegt die Aufgabe zugrunde, Verfahren und Vorrichtungen zur Übertragung und zum Empfang von skalierbaren Daten aufzuzeigen.

Diese Aufgabe wird durch ein Verfahren mit den Merkmalen des Anspruchs 1 sowie durch Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Übertragung von Informationen werden Basis-Informationen gesendet, und es werden eines oder mehrere Pakete mit die Basis-Informationen ergänzenden Informationen gesendet. Die ergänzenden Informationen erhöhen, wenn sie durch einen Empfänger dekodiert werden, die Qualität der Basis-Informationen. Erfindungsgemäß enthalten die Pakete mindestens ein Feld mit Angaben darüber, auf welche Weise die ergänzenden Informationen des jeweiligen Paketes die Qualität der Basis-Informationen erhöhen, wobei das mindestens eine Feld unabhängig von den ergänzenden Informationen des jeweiligen Paketes auslesbar ist.

Es werden sowohl Basis-Informationen gesendet, als auch ergänzende Informationen, welche die Qualität der Basis-Informationen erhöhen, wenn ein Empfänger sie zusätzlich zu den Basis-Informationen dekodiert. Die Basis-Informationen können auch ohne die ergänzenden Informationen empfängerseitig dekodiert und verarbeitet werden, ein Empfang der ergänzenden Informationen ist hierzu nicht nötig. Bei den Basis-Informationen und den ergänzenden Informationen handelt es sich um skalierbare Informationen. Vorzugsweise findet die Versendung der Basis-Informationen vor der Versendung der ergänzenden Informationen statt.

Die Basis-Informationen und die ergänzenden Informationen können durch Kodierung von Daten erzeugt werden. Bei diesen Daten kann es sich beispielsweise um Bildinformation, Audioinformation, Videoinformation, Sprachinformation, oder auch um eine Kombination dieser Informationstypen handeln.

Insbesondere ist es vorteilhaft, wenn die ergänzenden Informationen versendet werden, ohne dass hierzu eine eigene Aufforderung ergeht. So kann beispielsweise ein Empfänger bestimmte Daten anfordern, woraufhin der Sender diese Daten als Basis-Informationen versendet und zusätzlich, ohne von dem Empfänger hierzu eigens aufgefordert zu werden, die ergänzenden Informationen. In diesem Fall ergeht eine Anforderung, die sowohl die Basis-Informationen als auch die ergänzenden Informationen betrifft, und keine eigene Anforderung für die Basis-Informationen und die ergänzenden Informationen.

Die Pakete mit den ergänzenden Informationen enthalten mindestens ein Feld mit Angaben über die Weise der Erhöhung der Qualität, welche die Basis-Informationen durch Dekodierung der ergänzenden Informationen erfahren. Diese Angabe kann z.B. durch eine Angabe von einer oder mehreren Zahlen oder Bits realisiert werden, wobei dem Empfänger der Angabe bekannt ist, in welcher Weise der Qualitätserhöhung die Zahlenangabe entspricht. Die Weise der Qualitätserhöhung kann eine quantitative und/oder eine qualitative Angabe darstellen, wie z.B. eine Richtung der Qualitätserhöhung in Verbindung mit einem Betrag, wobei der Betrag absolut oder gegenüber einer Referenz abgefasst sein kann.

Das mindestens eine Feld ist unabhängig von den ergänzenden Informationen des jeweiligen Paketes auslesbar. Dies bedeutet, dass der Inhalt des mindestens einen Feldes ausgelesen werden kann, ohne dass die ergänzenden Informationen des jeweiligen Paketes oder ein Teil der ergänzenden Informationen des jeweiligen Paketes ausgelesen werden müssen. Somit kann, wenn festzustellen ist, auf welche Weise die ergänzenden Informationen eines Paketes die Qualität der Basis-Informationen erhöhen, auf eine Dekodierung von ergänzenden Informationen vollständig verzichtet werden, da die Betrachtung bzw. Dekodierung des mindestens einen Feldes hierzu ausreicht.

In Weiterbildung der Erfindung werden Informationen darüber versendet, welche Gruppierung für die ergänzenden Informationen verwendet wird. Dies ist insbesondere vorteilhaft, wenn mehrere mögliche Gruppierungen existieren, welche dem Empfänger gegebenenfalls bekannt sind, und eine Auswahl aus diesen möglichen Gruppierungen getroffen wird. Eine Gruppierung der ergänzenden Informationen entspricht einer Zusammenfassung der ergänzenden Informationen, wobei jede Gruppe, zu welcher die ergänzenden Informationen zusammengefasst werden, eine oder mehrere der ergänzenden Informationen enthalten kann. Die Ausgestaltung der Angaben über die Qualitätserhöhung kann von der gewählten Gruppierung abhängen und dementsprechend können die Angaben der gewählten Gruppierung angepasst werden. So kann beispielsweise eine bestimmte Gruppierung eine bestimmte Struktur der Angaben nach sich ziehen.

Einer Ausgestaltung der Erfindung gemäß werden die Informationen über die Gruppierung bei einem Verbindungsaufbau gesendet und die entsprechende Gruppierung wird für die folgende Übertragung der ergänzenden Informationen verwendet. In diesem Fall ist die Mitteilung über die Gruppierung getrennt von der Übertragung der Basis- und der ergänzenden Informationen, sie findet im Vorfeld dieser Übertragung statt.

Alternativ zur Versendung der Informationen über die Gruppierung im Vorfeld können die Informationen über die Gruppierung auch in dem mindestens einen Feld enthalten sein. So kann insbesondere bei zwei möglichen Gruppierungen ein Bit eingesetzt werden, welches für jedes Paket mit ergänzenden Informationen anzeigt, auf welche Weise die ergänzenden Informationen des Paketes gruppiert sind.

Einer vorteilhaften Ausgestaltung der Erfindung gemäß werden Informationen über den Aufbau des mindestens einen Feldes gesendet. Dies kann sich z.B. auf die Länge des Feldes oder der Felder beziehen, oder auf die Parameter, mit welchen das Feld oder die Felder belegt werden, oder auf die Wertebereiche für diese Parameter.

In Weiterbildung der Erfindung werden die Angaben eines Paketes in eine Entscheidung einbezogen, ob das Paket zu einem Empfänger weitergeleitet werden soll. Dies ist z.B. in einer Situation möglich, in welcher die Pakete von einem Sender an einen ersten Empfänger gesendet werden, welcher für die Weiterleitung der empfangenen Pakete an einen zweiten Empfänger verantwortlich ist. Der erste Empfänger trifft dann unter Verwendung der Angaben der Pakete die Entscheidung über die Weiterleitung an den zweiten Empfänger. Neben den Angaben können weitere Größen in die Entscheidung über die Weiterleitung einbezogen werden. Dieses Verfahren kann in Bezug auf eines, mehrere oder alle Pakete mit den ergänzenden Informationen durchgeführt werden.

Gemäß einer anderen Weiterbildung der Erfindung werden die Angaben eines Paketes in eine Entscheidung einbezogen, ob das Paket von einem Empfänger dekodiert werden soll. Dies ist z.B. in einer Situation möglich, wenn ein Empfänger Pakete mit ergänzenden Informationen empfangen hat, jedoch nur ein Teil dieser Pakete dekodiert werden kann oder soll. Neben den Angaben können weitere Größen in die Entscheidung über die Weiterleitung einbezogen werden. Dieses Verfahren kann in Bezug auf eines, mehrere oder alle Pakete mit den ergänzenden Informationen durchgeführt werden.

Es ist vorteilhaft, wenn die Angaben anzeigen, dass die ergänzenden Informationen die Qualität der Basis-Informationen durch Erhöhung der zeitlichen Auflösung und/oder Erhöhung der örtlichen Auflösung und/oder Erhöhung des Signal-zu-Rausch-Verhältnisses erhöhen. Die Angaben können auch quantitative Angaben in Bezug auf die genannten Erhöhungs-Größen enthalten.

In Ausgestaltung der Erfindung ist das mindestens eine Feld Bestandteil eines Paket-Kopfteils. Ein Paket-Kopfteil steht zu Beginn eines Paketes und trägt Signalisierungsinformation. Diese Ausgestaltung ermöglicht das Auslesen der Angaben über die Weise der Qualitätserhöhung, ohne den restlichen, dem Kopfteil folgenden Inhalt des Paketes betrachten zu müssen.

Mit Vorzug handelt es sich bei den Basis-Informationen um Videoinformationen. Besonders vorteilhaft ist es, wenn diese an einen Funk-Empfänger zu übertragen sind. Die Videoinformationen können z.B. von einem Sender über Leitung versendet werden und von einer anderen Einrichtung per Funk an den Funk-Empfänger weitergeleitet werden.

Einem ersten erfindungsgemäßen Verfahren zum Empfangen und Verarbeiten von Informationen durch einen Empfänger zufolge werden Basis-Informationen empfangen, und eines oder mehrere Pakete mit die Basis-Informationen ergänzenden Informationen, welche bei Dekodierung die Qualität der Basis-Informationen erhöhen. Die Pakete enthalten mindestens ein Feld mit Angaben darüber, auf welche Weise die ergänzenden Informationen des jeweiligen Paketes die Qualität der Basis-Informationen erhöhen, wobei das mindestens eine Feld unabhängig von den ergänzenden Informationen des jeweiligen Paketes auslesbar ist. Die Angaben eines Paketes werden von dem Empfänger in eine Entscheidung einbezogen, ob das Paket zu einem anderen Empfänger weitergeleitet werden soll.

Einem zweiten erfindungsgemäßen Verfahren zum Empfangen und Verarbeiten von Informationen durch einen Empfänger zufolge werden Basis-Informationen empfangen, und eines oder mehrere Pakete mit die Basis-Informationen ergänzenden Informationen, welche bei Dekodierung die Qualität der Basis-Informationen erhöhen. Die Pakete enthalten mindestens ein Feld mit Angaben darüber, auf welche Weise die ergänzenden Informationen des jeweiligen Paketes die Qualität der Basis-Informationen erhöhen, wobei das mindestens eine Feld unabhängig von den ergänzenden Informationen des jeweiligen Paketes auslesbar ist. Die Angaben eines Paketes werden von dem Empfänger in eine Entscheidung einbezogen, ob das Paket von dem Empfänger dekodiert werden soll.

Die erfindungsgemäßen Verfahren zum Empfangen und Verarbeiten von Informationen durch einen Empfänger können in Bezug auf eines oder mehrere empfangene Pakete mit ergänzenden Informationen angewandt werden. In Weiterbildung der Erfindung können die beschriebenen Schritte des erfindungsgemäßen Verfahrens zur Übertragung von Informationen Bestandteil der Verfahren zum Empfangen und Verarbeiten von Informationen durch einen Empfänger sein.

Der erfindungsgemäße Sender zur Versendung von Informationen weist Mittel auf zum Versenden von Basis-Informationen, und Mittel zum Versenden eines oder mehrerer Pakete mit die Basis-Informationen ergänzenden Informationen, welche bei Dekodierung durch einen Empfänger die Qualität der Basis-Informationen erhöhen. Erfindungsgemäß umfasst er Mittel zum Einfügen in die Pakete von mindestens einem Feld mit Angaben darüber, auf welche Weise die ergänzenden Informationen des jeweiligen Paketes die Qualität der Basis-Informationen erhöhen. Die Angaben werden derart in die Pakete eingefügt, dass das mindestens eine Feld unabhängig von den ergänzenden Informationen des jeweiligen Paketes auslesbar ist.

Der erfindungsgemäße Sender kann auch durch mehrere miteinander verbundene Einrichtungen, welche in Kombination miteinander die genannten Mittel aufweisen, realisiert werden.

Ein erster erfindungsgemäßer Empfänger zum Empfangen und Verarbeiten von Informationen weist Mittel auf zum Empfangen von Basis-Informationen und zum Empfangen von einem oder mehreren Paketen mit die Basis-Informationen ergänzenden Informationen, welche bei Dekodierung die Qualität der Basis-Informationen erhöhen, wobei die Pakete mindestens ein Feld mit Angaben darüber enthalten, auf welche Weise die ergänzenden Informationen des jeweiligen Paketes die Qualität der Basis-Informationen erhöhen, wobei das mindestens eine Feld unabhängig von den ergänzenden Informationen des jeweiligen Paketes auslesbar ist. Weiterhin umfasst er Mittel zum Entscheiden hinsichtlich von einem oder mehrerer der Pakete unter Verwendung der Angaben, ob das jeweilige Paket an einen anderen Empfänger weiterzuleiten ist.

Ein zweiter erfindungsgemäßer Empfänger zum Empfangen und Verarbeiten von Informationen weist Mittel auf zum Empfangen von Basis-Informationen und zum Empfangen von einem oder mehreren Paketen mit die Basis-Informationen ergänzenden Informationen, welche bei Dekodierung die Qualität der Basis-Informationen erhöhen, wobei die Pakete mindestens ein Feld mit Angaben darüber enthalten, auf welche Weise die ergänzenden Informationen des jeweiligen Paketes die Qualität der Basis-Informationen erhöhen, wobei das mindestens eine Feld unabhängig von den ergänzenden Informationen des jeweiligen Paketes auslesbar ist. Weiterhin umfasst er Mittel zum Entscheiden hinsichtlich von einem oder mehrerer der Pakete unter Verwendung der Angaben, ob das jeweilige Paket zu dekodieren ist.

Der erfindungsgemäße Sender und die erfindungsgemäßen Empfänger eignen sich insbesondere zur Durchführung der erfindungsgemäßen Verfahren, wobei dies auch auf die Ausgestaltungen und Weiterbildungen zutreffen kann. Hierzu können sie weitere geeignete Mittel aufweisen.

Im folgenden wird die Erfindung anhand eines Ausführungsbeispiels näher erläutert. Dabei zeigen:
- Figur 1:: einen Ausschnitt aus einem Kommunikationsnetz,
- Figur 2:: symbolisch die Bestandteile von skalierbaren Daten,
- Figur 3a:: einen ersten erfindungsgemäßen Header-Aufbau,
- Figur 3b:: einen zweiten erfindungsgemäßen Header-Aufbau,
- Figur 4:: den erfindungsgemäßen Aufbau von Datenpaketen.

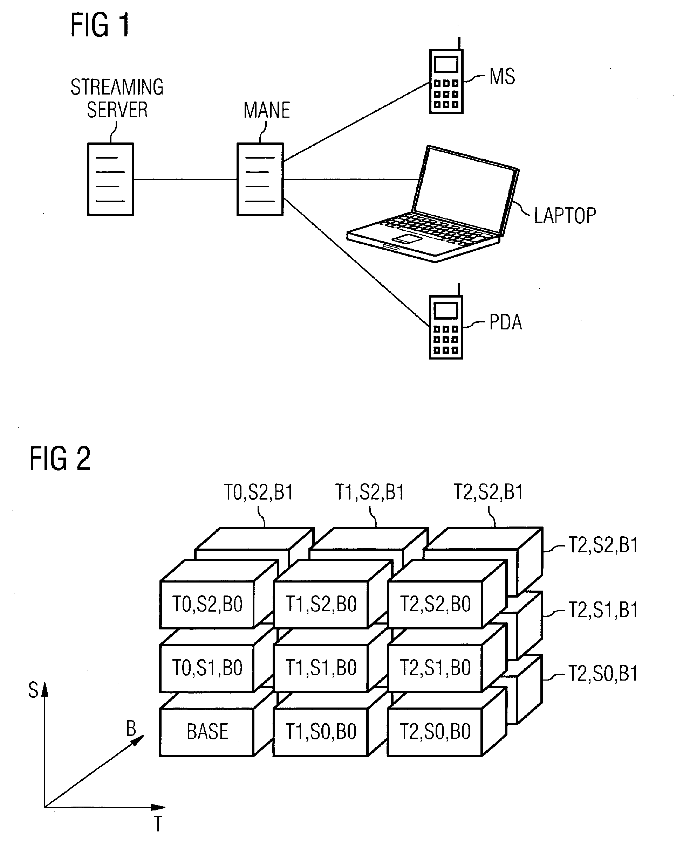

Der in Figur 1 dargestellte Ausschnitt aus einem Kommunikationsnetz umfasst den Sender STREAMING SERVER, eine Verteilerstation MANE (Media Aware Network Element), sowie die Teilnehmerstation MS in Form eines mobilen Telefons, die Teilnehmerstation LAPTOP in Form eines mobilen Computers, und die Teilnehmerstation PDA in Form eines Personal Digital Assistant. Die Verbindung zwischen dem Sender STREAMING SERVER und der Verteilerstation MANE erfolgt z.B. über das Internet. Zwischen der Verteilerstation MANE und den Teilnehmerstationen MS, LAPTOP und PDA, welche die von dem Sender STREAMING SERVER gesendeten Informationen per Funk empfangen, kann die Übertragung über weitere Einrichtungen erfolgen.

Der Sender STREAMING SERVER sendet Videoinformationen in Echtzeit als skalierbare Daten, symbolisch in Figur 2 dargestellt. Die skalierbaren Daten liegen senderseitig als Ergebnis einer Kodierung von Videoinformationen vor. Diese Kodierung wird vorzugsweise von dem Sender STREAMING SERVER durchgeführt. Der Block in der linken unteren Ecke der Figur 2 entspricht der Basisinformation BASE. Die weiteren Blöcke, durch die Größen T, B und S indiziert, entsprechen den ergänzenden Informationen. Die nach rechts verlaufende T-Achse gibt an, wie viele Bilder pro Zeiteinheit gesendet werden, beispielsweise können die ersten Blöcke nach rechts einer Datenrate von 7,5 fps (fps: frames per second) entsprechen, die zweiten Blöcke nach rechts einer Datenrate von 15 fps und die dritten Blöcke nach rechts einer Datenrate von 30 fps. Die nach oben verlaufende S-Achse gibt an, wie gut die örtliche Auflösung des jeweiligen Bildes ist, d.h. wie viele Pixel ein Bild enthält, beispielsweise können die ersten Blöcke nach oben QCIF (Quarter Common Intermediate Format, dies entspricht einer Bildgröße mit 176x144 Bildpunkten) entsprechen, die zweiten Blöcke nach oben CIF (Common Intermediate Format, dies entspricht einer Bildgröße mit 352x288 Bildpunkten), und die dritten Blöcke nach oben 4CIF (4 times Common Intermediate Format, dies entspricht einer Bildgröße mit 704x576 Bildpunkten). Die nach hinten verlaufende B-Achse gibt das Signal-zu-Rausch-Verhältnis (SNR: Signal to Noise Ratio) eines Bildes an. Nach rechts nimmt somit die zeitliche Auflösung der Videoinformationen zu, nach oben die örtlichen Auflösung und nach hinten das Signal-zu-Rausch-Verhältnis. Jeder Block der Figur 2 enthält die Daten, welche für die Verbesserung der visuellen Qualität um eine Stufe in einer Richtung der drei Skalierbarkeitsdimensionen benötigt werden.

Die Erfindung ist auch auf die Übertragung von Standbildern anwendbar. In diesem Fall existieren anstelle der drei Skalierbarkeitsdimensionen der Figur 2 lediglich zwei Dimensionen, die T-Achse entfällt. Auch für Audio-Informationen eignet sich der Einsatz der Erfindung. Weiterhin ist die Verwendung einer anderen Anzahl an Skalierbarkeitsdimensionen oder anderer Skalierbarkeitsdimensionen als in Figur 2 dargestellt in Bezug auf Video- oder andere Informationen im Rahmen der Erfindung denkbar.

Grundsätzlich reicht es, wenn ein Empfänger die Basisinformation BASE empfängt und dekodiert, diese weist jedoch keine hohe Qualität auf. Eine Teilnehmerstation muss, um die Videoinformationen anzeigen zu können, zumindest die Basisinformation BASE dekodieren. Die Dekodierung eines jeden weiteren Blockes der Figur 2 zusätzlich zu der Basisinformation BASE verbessert die Qualität der Videoinformation. Abhängig von dem verwendeten Kodierverfahren können die Blöcke mit den ergänzenden Informationen nicht in beliebiger Reihenfolge mit der Basisinformation BASE kombiniert werden. So kann bei H.264/MPEG-4 AVC beispielsweise der Block T0,S2,B0 nicht vor dem Block T0,S1,B0 dekodiert werden.

Vom senderseitigen Koder werden die Videoinformationen gemäß einer skalierbaren Erweiterung des Standards H.264/MPEG-4 AVC, beschrieben z.B. in
Heiko Schwarz, Detlev Marpe, und Thomas Wiegand: MCTF and Scalability Extension of H.264/AVC, Proc. PCS'04, San Francisco, CA, USA, December 15.-17. 2004
in Form von NALU's (Network Abstraction Layer Units) ausgegeben. Die NALU's werden logisch zu den Blöcken der Figur 2 zusammengesetzt, wobei jeder Block eines oder mehrere NALU's enthalten kann. Bei den Blöcken der Figur 2 kann es sich beispielsweise um die kodierten Daten eine Gruppe von Bildern (Group of Pictures, GOP) handeln. Zur Echtzeit-Übertragung der Videoinformationen wird das Real-Time-Transport-Protocol RTP verwendet. Bei RTP sind für verschiedene Kodierverfahren bestimmte RTP-Payload-Formate, d.h. die Formate der zum Transport der Daten verwendeten RTP-Pakete, definiert. Gemäß diesen Formaten werden senderseitig aus den Blöcken der Figur 2 RTP-Pakete erstellt, wobei jedes RTP-Paket Teile eines Blockes, einen Block, oder mehrere Blöcke enthalten kann. Die RTP-Pakete werden von dem Sender STREAMING SERVER an die Verteilerstation MANE gesendet, welche für die Weiterleitung der RTP-Pakete an die Teilnehmerstationen MS, LAPTOP und PDA verantwortlich ist.

Abhängig von den Ausgestaltungen und Anforderungen der Teilnehmerstationen MS, LAPTOP und PDA werden an diese die Basisinformation BASE und eine unterschiedliche Anzahl und Zusammensetzung an Paketen mit den ergänzenden Informationen weitergeleitet. So kann beispielsweise an die Teilnehmerstation LAPTOP die Basisinformation BASE und die ergänzenden Informationen T0,S1,B0 und T0,S2,B0 weitergeleitet werden, da die Teilnehmerstation LAPTOP eine große Anzeigefläche aufweist und somit eine gute örtliche Auflösung der Videoinformationen vorteilhaft ist, während an die Teilnehmerstation PDA, welche Wert auf eine gute zeitliche Auflösung legt, die Basisinformation BASE und die ergänzenden Informationen T0,S1,B0 und T1,S1,B0 weitergeleitet werden.

Der Sender STREAMING SERVER versendet die Basisinformation BASE und alle Pakete mit ergänzenden Informationen. Eine Auswahl der ergänzenden Informationen abhängig von dem Empfänger findet in der Verteilerstation MANE statt, d.h. die Verteilerstation MANE entscheidet, welches Paket an welchen Empfänger weiterzuleiten ist. Alternativ kann diese Auswahl jedoch auch von dem Sender STREAMING SERVER durchgeführt werden, oder von dem Empfänger selber, welche alle Pakete mit ergänzenden Informationen empfängt und entscheidet, welche Pakete dekodiert werden. Um den Aufwand in der Verteilerstation MANE gering zu halten, wird auf eine Dekodierung der Videoinformationen in der Verteilerstation MANE verzichtet. Hierzu kann die Verteilerstation MANE dem Header der Pakete, welche die ergänzenden Informationen enthalten, entnehmen, um welche ergänzenden Informationen es sich handelt.

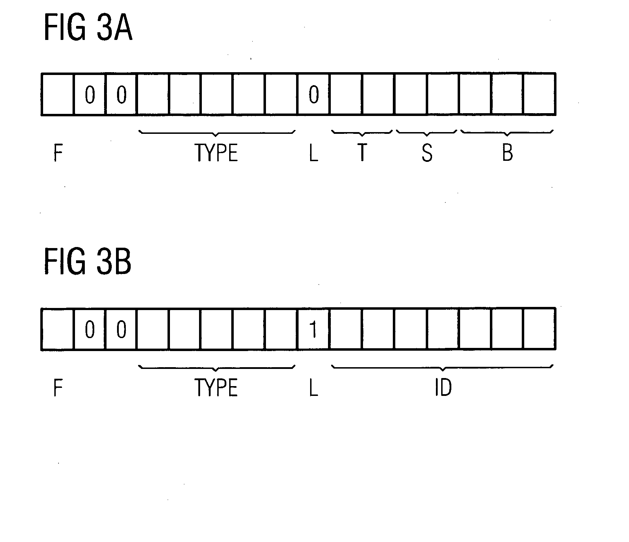

Figur 3a zeigt einen ersten Header eines ergänzende Informationen enthalten Paketes, welcher aus 16 Bit bzw. 2 Byte besteht. An erster Stelle steht das aus einem Bit bestehend Feld F, welches üblicherweise Bestandteil eines RTP-Headers bei der Übertragung von H.264/MPEG-4 AVC - kodierten Videoinformationen ist. Der Wert 0 signalisiert, dass die folgende NALU keine Bitfehler enthalten sollte. Ein Wert von 1 signalisiert hingegen, dass die folgende NALU Bitfehler enthalten kann. Die Verteilerstation MANE kann dieses Bit auf 1 setzen, wenn die NALU auf irgendeine Weise beschädigt wurde. Auf das Feld F folgen zwei Bits, welche hier wahlfrei zu Null gesetzt sind, da die übliche Funktionalität dieser beiden Bits, welche üblicherweise bei der Übertragung von H.264/MPEG-4 AVC - kodierten Videoinformationen Abhängigkeiten signalisieren, nicht benötigt wird. Auf die beiden Nullen folgt ein aus 5 Bit bestehendes Feld TYPE, welches üblicherweise Bestandteil eines RTP-Headers bei der Übertragung von H.264/MPEG-4 AVC - kodierten Videoinformationen ist. Die Typen 1 bis 23 des Feldes TYPE sind definiert in H.264/MPEG-4 AVC, die Typen 24 bis 29 dienen der Signalisierung von RTP-Aggregations-Paketen bzw. Fragmentation-Units, d.h. der Anzeige, dass das jeweilige Paket mehrere NALU's bzw. lediglich einen Teil einer NALU enthält. Der Typ 30 ist der Escape-Typ, welcher zur Anzeige noch nicht definierter Typen verwendet werden kann.

Auf das Feld TYPE folgt das aus einem Bit bestehende Feld L. Der Wert 0 signalisiert, dass die folgenden 7 Bits eine Klasse von ergänzenden Informationen identifizieren. Unter einer Klasse wird hierbei ein Block gemäß Figur 2 verstanden, so bilden beispielsweise die NALU's des Blockes T2, S0, B0 eine Klasse von NALU's. Das aus zwei Bits bestehende Feld T gibt den T-Wert gemäß der T-Achse der Figur 2 an, das ebenfalls aus zwei Bits bestehende Feld S gibt den S-Wert gemäß der S-Achse der Figur 2, und das aus drei Bits bestehende Feld B gibt den B-Wert gemäß der B-Achse der Figur 2 an. Die Felder L, T, S und B, welche über die beschriebenen üblichen Bestandteile eines RTP-Headers bei der Übertragung von H.264/MPEG-4 AVC - kodierten Videoinformationen hinausgehen, bestehen insgesamt aus 1 Byte. Es ist möglich, für die Felder L, T, S und B eine andere Gesamt-Byte- oder -Bit-Anzahl als die in Figur 3a dargestellte zu verwenden. Weiterhin ist eine andere Aufteilung der in Figur 3a dargestellten 7 Bits auf die Felder T, S und B denkbar.

Figur 3b zeigt einen zweiten Header eines ergänzende Informationen enthalten Paketes, welcher aus 16 Bit bzw. 2 Byte besteht. Die Bedeutung der Felder vor dem Feld L unterscheiden sich nicht von dem in Figur 3a dargestellten Header. Im Gegensatz zu Figur 3a ist das Feld L der Figur 3b jedoch mit dem Wert 1 belegt. Dieser Wert 1 signalisiert, dass die folgenden 7 Bits des Feldes ID eine Schicht bestehend aus einer Mehrzahl an Blöcken der Figur 2 identifizieren. Eine erste Schicht kann z.B. aus den Blöcken T0, S1, B0, T1, S1, B0, T1, S0, B0, T0, S0, B1, T1, S0, B1, T0, S1, B1 und T1, S1, B1 bestehen, eine zweite Schicht aus den Blöcken T2, S0, B0, T2, S0, B1, T2, S1, B0 und T2, S1, B1, und eine dritte Schicht aus den Blöcken T0, S2, B0, T0, S2, B1, T1, S2, B0, T1, S2, B1, T2, S2, B0 und T2, S2, B1. Die Schichten sollten so konstruiert sein, dass jede Schicht in mindestens einer Skalierungsrichtung, d.h. in Bezug auf zumindest eine der Achsen T, S oder B, eine höhere Auflösungsstufe enthalten muss als die nächst niedrigere Schicht.

Die Verwendung des Feldes L unterstützt somit zwei verschiedene Formen der skalierbaren Repräsentation von skalierbaren Daten. Werden Klassen verwendet, so ist eine Adaption in mehrere Richtungen möglich, so kann gemäß Figur 2 die Basisinformation BASE durch ergänzende Informationen in Richtung der T-Achse und/oder in Richtung der B-Achse und/oder in Richtung der S-Achse verbessert werden. Bei dem Einsatz von Schichten hingegen ist die Richtung der Adaption vorgegeben, es handelt sich um eine eindimensionale Adaption, da die Basisinformation BASE zuerst nur durch die ergänzende Information der ersten Schicht verbessert werden kann, dann weiter durch die ergänzende Information der zweiten Schicht, usw. Somit ist bei Verwendung von Klassen anstelle von Schichten eine höhere Flexibilität in Bezug auf die Bedürfnisse des Empfängers möglich. Die Entscheidung, ob Klassen oder Schichten verwendet werden, wird von dem Sender STREAMING SERVER getroffen.

Im folgenden wird der Aufbau von zur Versendung der Videoinformation verwendeten RTP-Paketen betrachtet. Bei der Erstellung der RTP-Pakete werden von dem Sender STREAMING SERVER für den Fall, dass Klassen verwendet werden, alle NALU's einer Klasse in einem RTP-Paket versendet, sofern die vorgegebene Länge des RTP-Paketes dies zulässt. Ist dies aufgrund der beschränkten Menge nicht möglich, so werden die NALU's einer Klasse auf mehrere aufeinander folgende RTP-Pakete aufgeteilt. Entsprechendes gilt auch für Schichten.

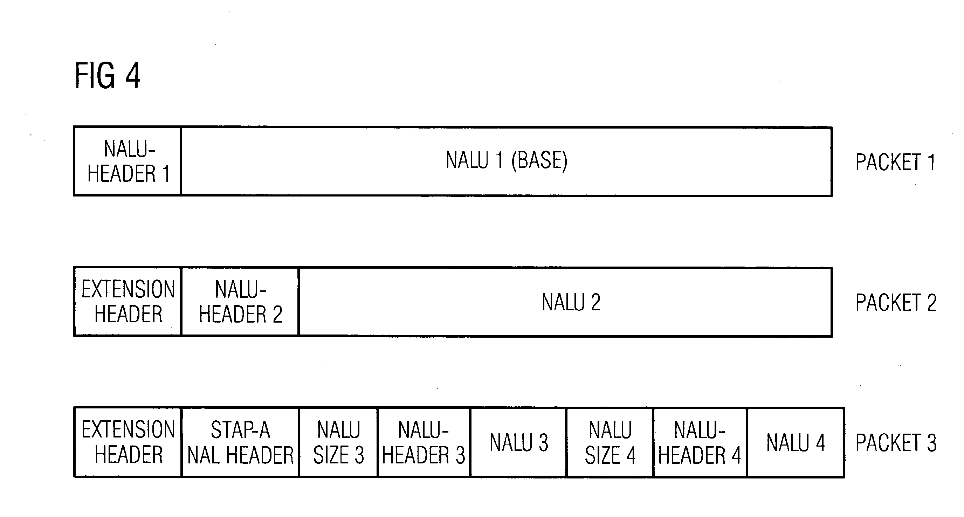

Figur 4 zeigt den Aufbau von drei RTP-Paketen PACKET 1, PACKET 2 und PACKET 3. Das Paket PACKET 1 beinhaltet eine erste NALU NALU 1 in Form der Basisinformation BASE. Der Header NALU-HEADER 1 des Paketes PACKET 1 entspricht dem üblichen unmodifizierten RTP-Header. Eine Signalisierung der Basisinformation unter Verwendung der Felder L, T, S und B, bzw. L und ID findet nicht statt. Somit wird die Basisinformation BASE wie im RTP-Payload-Format von H.264/MPEG-4 AVC beschrieben übertragen.

Der Header des Paketes PACKET 2 besteht aus dem erfindungsgemäßen Header EXTENSION HEADER, welcher gemäß Figur 3a oder 3b aufgebaut ist. Der Header EXTENSION HEADER signalisiert, dass der folgende Inhalt Update-Daten der entsprechenden Klasse oder der entsprechenden Schicht enthält. Er gibt somit entweder die Klasse oder die Schicht der im Paket PACKET 2 enthaltenen NALU NALU 2 an. Bei der NALU NALU 2 kann es sich beispielsweise um die Update-Daten von einer Klasse T0 auf eine Klasse T1 handeln. Nach dem Header EXTENSION HEADER folgt der Header NALU-HEADER 1, welcher wie üblich bei Versendung von H.264/MPEG-4 AVC Daten über RTP aufgebaut ist.

Der Header des Paketes PACKET 3 besteht aus dem erfindungsgemäßen Header EXTENSION HEADER, welcher gemäß Figur 3a oder 3b aufgebaut ist. Er gibt somit die Klasse oder Schicht der im Paket PACKET 3 enthaltenen NALU's NALU 3 und NALU 4 an. Auf den Header EXTENSION HEADER folgt das Feld STAP-A NAL HEADER, der Header NALU SIZE 3 der NALU NALU 3, sowie der Header NALU-HEADER 3 der NALU NALU 3, gefolgt von der NALU NALU 3. Im Anschluss an die NALU NALU 3 ist eine weitere NALU NALU 4 in dem Paket PACKET 3 enthalten, welche auf ihre Header NALU SIZE 4, sowie NALU-HEADER 4 folgt. Das Feld STAP-A NAL HEADER (STAP-A: Single Time Aggregation Packet, Type A) signalisiert z.B., dass keine weiteren Zeitinformationen (time stamps) verwendet werden. Das Feld NALU SIZE gibt jeweils die Länge der folgenden NALU an, so dass deren Ende erkannt werden kann. Die Felder STAP-A PACKET HEADER, NALU SIZE 3, NALU-HEADER 3, NALU SIZE 4 und NALU-HEADER 4 sind wie bei Versendung von H.264/MPEG-4 AVC Daten über RTP üblich aufgebaut.

Auch bei einer nicht in Figur 4 dargestellten Fragmentation einer NALU auf mehrere RTP-Pakete wird der Header EXTENSION HEADER analog zu dem Aggregation-Header des Paketes PACKET 3 vor dem Fragmentation-Header übertragen.

Bei den Paketen PACKET 1, PACKET 2 und PACKET 3 können jeweils am Ende einer NALU Padding-Bits zum Auffüllen der RTP-Paketes stehen.

Die Verteilerstation MANE entscheidet aufgrund des Inhaltes der Header EXTENSION HEADER der Pakete PACKET 2 und PACKET 3, und ihrer Kenntnisse über die Teilnehmerstationen MS, LAPTOP oder PDA, welche Pakete an die jeweilige Teilnehmerstation MS, LAPTOP oder PDA weiterzuleiten sind. Auf diese Weise werden nur diejenigen Blöcke der Figur 2 mit ergänzenden Informationen übertragen, welche von der jeweiligen Teilnehmerstation benötigt werden.

Das Aussondern von RTP-Paketen durch die Verteilerstation MANE erfolgt, ohne dass die Verteilerstation MANE die NALU's dekodieren muss. Es ist somit weder eine Dekodierung des Bitstromes, noch eine Kenntnis über den Aufbau der NALU's, noch über die Abhängigkeiten zwischen verschiedenen NALU's erforderlich. Vielmehr genügt eine Betrachtung des Inhaltes der erfindungsgemäßen Header für die Entscheidung, ob das jeweilige Paket an einen bestimmten Empfänger weiterzuleiten ist oder nicht.

Zur Entscheidung darüber, ob ein RTP-Paket an einen bestimmten Empfänger weiterzuleiten ist, wird außer dem Header EXTENSION HEADER keine weitere Information von dem Sender des RTP-Paketes benötigt. Insbesondere muss nach dem Empfang eines RTP-Paketes nicht abgewartet werden, bis Informationen über die Art der ergänzenden Informationen eintreffen, bevor die Entscheidung über die Weiterleitung getroffen wird, da das Paket die benötigten Informationen über die Art der ergänzenden Informationen beinhaltet.

Diejenigen Dekodierer, welche lediglich H.264/MPEG-4 AVC und nicht eine skalierbare Erweiterung von H.264/MPEG-4 AVC dekodieren können, dekodieren das Paket PACKET 1. Aufgrund des Headers EXTENSION HEADER der Pakete PACKET 2 und PACKET 3 ignorieren sie die Pakete PACKET 2 und PACKET 3. Dies wird dadurch erreicht, dass der Typ-Eintrag des Headers EXTENSION HEADER ein Escape-Code ist, welcher den H.264/MPEG-4 AVC kompatiblen Dekodern ohne skalierbare Erweiterung signalisiert, dieses Paket zu ignorieren. Daher ist das beschriebene Verfahren abwärts-kompatibel in Bezug auf das nicht skalierbare H.264/MPEG-4 AVC.

Während die Erfindung gemäß Figur 1 für den Fall beschrieben wurde, dass eine Verteilerstation MANE die Aussonderung von RTP-Paketen vornimmt und nur die jeweils übrigen Pakete an eine Teilnehmerstation weiterleitet, kann diese Aussonderung auch durch eine Teilnehmerstation oder einen Proxy erfolgen. Eine Teilnehmerstation, welche lediglich H.264/MPEG-4 AVC und nicht das skalierbare H.264/MPEG-4 AVC dekodieren kann, dekodiert die Basisinformation BASE und ignoriert die Pakete, welche einen Header EXTENSION-HEADER aufweisen. Anderenfalls kann eine Teilnehmerstation dem Header EXTENSION-HEADER die Klasse oder Schicht der jeweiligen ergänzenden Informationen entnehmen, und daraufhin entscheiden, ob das jeweilige Paket zu dekodieren ist. Diese Entscheidung kann nach den gleichen Kriterien getroffen werden, nach welchen die Verteilerstation MANE über die Weiterleitung der Pakete entscheidet.

Vor der Übertragung der Videoinformationen werden die prinzipiellen Möglichkeiten der Skalierbarkeit zwischen Sender und Empfänger, d.h. entweder gemäß Figur 1 zwischen dem Sender STREAMING SERVER und der Verteilerstation MANE, oder alternativ zwischen dem Sender STREAMING SERVER und den Teilnehmerstationen MS, LAPTOP und PDA, vereinbart. Hierbei handelt es sich um die Anzahl der Skalierbarkeitsdimensiohen und für jede Skalierbarkeitsdimension um die Anzahl der Stufen. Sollen Schichten verwendet werden, ist auch ihre Anzahl und Zusammensetzung zu vereinbaren. Weiterhin kann vereinbart werden, wie eine Skalierung zu erfolgen hat, d.h. für welchen Empfänger oder welche Art von Empfänger, gegebenenfalls unter welchen Bedingungen, welche Blöcke der ergänzenden Informationen bestimmt sind. Diese Vereinbarungen können beim Aufbau der Verbindung erfolgen, z.B. durch das Session Description Protocol, oder auch standardmäßig festgelegt sein. Alternativ kann auch eine Übermittlung dieser Vereinbarungen bei der Versendung der Videoinformationen erfolgen. Dies erfolgt vorzugsweise unter Verwendung der Klassen-Identifikation 0,0,0 bzw. der Schichten-Identifikation 0, welche auch zur Identifizierung der Basisinformation herangezogen wird. Bei Verwendung der Klassen-Identifikation 0,0,0 bzw. der Schichten-Identifikation 0 wird, wie oben beschreiben, kein Header EXTENSION-HEADER verwendet.

Es können Zusatzinformationen über den Inhalt der einzelnen Klassen oder Schichten oder über bevorzugte Skalierungsstrategien, d.h. welche Pakete an welche Teilnehmerstationen weitergeleitet oder von diesen dekodiert werden sollen, vorzugsweise in Paketen mit einer speziellen Klassen- oder Schichten-Identifikation von oder zu der Verteilerstation MANE gesendet werden. Derartige Zusatzinformationen können genutzt werden, um dynamisch auf Kommunikations-Bedingungen zu reagieren und den Datenstrom entsprechend anzupassen.

## Patentansprüche

1. Verfahren zur Übertragung von Informationen, bei dem
• Basis-Informationen (BASE) gesendet werden,
• eines oder mehrere Pakete (PACKET 2, PACKET 3) mit die Basis-Informationen (BASE) ergänzenden Informationen gesendet werden, welche bei Dekodierung durch einen Empfänger (MANE, MS, LAPTOP, PDA) die Qualität der Basis-Informationen (BASE) erhöhen,
• die Pakete (PACKET 2, PACKET 3) mindestens ein Feld (L, T, S, B; L, ID) mit Angaben darüber enthalten, auf welche Weise die ergänzenden Informationen des jeweiligen Paketes (PACKET 2, PACKET 3) die Qualität der Basis-Informationen (BASE) erhöhen,
wobei das mindestens eine Feld (L, T, S, B; L, ID) unabhängig von den ergänzenden Informationen des jeweiligen Paketes (PACKET 2, PACKET 3) auslesbar ist,
**dadurch gekennzeichnet, dass** in einem separaten Feld (L) des mindestens einen Feldes (L, T, S, B; L, ID), getrennt von den Angaben über die Qualitätserhöhung, Informationen versendet werden, welche signalisiert, welche von mehreren möglichen Gruppierungen für die ergänzenden Informationen verwendet wird, und gleichzeitig eine bestimmte Struktur der Angaben über die Qualitätserhöhung.

2. Verfahren nach Anspruch 1, bei dem
die Informationen über die Gruppierung bei einem Verbindungsaufbau gesendet werden und die entsprechende Gruppierung für die folgende Übertragung der ergänzenden Informationen verwendet wird.

3. Verfahren nach Anspruch 1, bei dem
die Informationen in dem mindestens einen Feld (L, T, S, B; L, ID) enthalten sind.

4. Verfahren nach einem der Ansprüche 1 bis 3, bei dem
Informationen über den Aufbau des mindestens einen Feldes (L, T, S, B; L, ID) gesendet werden.

5. Verfahren nach einem der Ansprüche 1 bis 4, bei dem
die Angaben eines Paketes (PACKET 2, PACKET 3) in eine Entscheidung einbezogen werden, ob das Paket (PACKET 2, PACKET 3) zu einem Empfänger (MS, LAPTOP, PDA) weitergeleitet werden soll.

6. Verfahren nach einem der Ansprüche 1 bis 4, bei dem
die Angaben eines Paketes (PACKET 2, PACKET 3) in eine Entscheidung einbezogen werden, ob das Paket (PACKET 2, PACKET 3) von einem Empfänger (MS, LAPTOP, PDA) dekodiert werden soll.

7. Verfahren nach einem der Ansprüche 1 bis 6, bei dem
die Angaben anzeigen, dass die ergänzenden Informationen die Qualität der Basis-Informationen (BASE) durch Erhöhung der zeitlichen Auflösung (T) und/oder Erhöhung der örtlichen Auflösung (S) und/oder Erhöhung des Signal-zu-Rausch-Verhältnisses (SNR) erhöhen.

8. Verfahren nach einem der Ansprüche 1 bis 7, bei dem
das mindestens eine Feld (L, T, S, B; L, ID) Bestandteil eines Paket-Kopfteils (EXTENSION HEADER) ist.

9. Verfahren nach einem der Ansprüche 1 bis 8, bei dem
es sich bei den Basis-Informationen (BASE) um Videoinformationen handelt.

10. Verfahren zum Empfangen und Verarbeiten von Informationen
durch einen Empfänger (MANE), bei dem Basis-Informationen (BASE) empfangen werden,
eines oder mehrere Pakete (PACKET 2, PACKET 3) mit die Basis-Informationen (BASE) ergänzenden Informationen empfangen werden, welche bei Dekodierung die Qualität der Basis-Informationen (BASE) erhöhen,
die Pakete (PACKET 2, PACKET 3) mindestens ein Feld (L, T, S, B; L, ID) mit Angaben darüber enthalten, auf welche Weise die ergänzenden Informationen des jeweiligen Paketes (PACKET 2, PACKET 3) die Qualität der Basis-Informationen (BASE) erhöhen, wobei das mindestens eine Feld (L, T, S, B; L, ID) unabhängig von den ergänzenden Informationen des jeweiligen Paketes (PACKET 2, PACKET 3) ausgelesen wird,
und
die Angaben eines Paketes (PACKET 2, PACKET 3) von dem Empfänger (MANE) in eine Entscheidung einbezogen werden, ob das Paket (PACKET 2, PACKET 3) zu einem anderen Empfänger (MS, LAPTOP, PDA) weitergeleitet werden soll,
**dadurch gekennzeichnet, dass**
in einem separaten Feld (L) des mindestens einen Feldes (L, T, S, B; L, ID), getrennt von den Angaben über die Qualitätserhöhung, Informationen empfangen werden, welche signalisiert, welche von mehreren möglichen Gruppierungen für die ergänzenden Informationen verwendet wird, und gleichzeitig eine bestimmte Struktur der Angaben über die Qualitätserhöhung.

11. Verfahren zum Empfangen und Verarbeiten von Informationen durch einen Empfänger (MS, LAPTOP, PDA), bei dem Basis-Informationen (BASE) empfangen werden,
eines oder mehrere Pakete (PACKET 2, PACKET 3) mit die Basis-Informationen (BASE) ergänzenden Informationen empfangen werden, welche bei Dekodierung die Qualität der Basis-Informationen (BASE) erhöhen,
die Pakete (PACKET 2, PACKET 3) mindestens ein Feld (L, T, S, B; L, ID) mit Angaben darüber enthalten, auf welche Weise die ergänzenden Informationen des jeweiligen Paketes (PACKET 2, PACKET 3) die Qualität der Basis-Informationen (BASE) erhöhen, wobei das mindestens eine Feld (L, T, S, B; L, ID) unabhängig von den ergänzenden Informationen des jeweiligen Paketes (PACKET 2, PACKET 3) ausgelesen wird,
und
die Angaben eines Paketes (PACKET 2, PACKET 3) von dem Empfänger (MS, LAPTOP, PDA) in eine Entscheidung einbezogen werden, ob das Paket (PACKET 2, PACKET 3) von dem Empfänger (MS, LAPTOP, PDA) dekodiert werden soll,
**dadurch gekennzeichnet, dass**
in einem separaten Feld (L) des mindestens einen Feldes (L, T, S, B; L, ID), getrennt von den Angaben über die Qualitätserhöhung, Informationen empfangen werden, welche signalisiert, welche von mehreren möglichen Gruppierungen für die ergänzenden Informationen verwendet wird, und gleichzeitig eine bestimmte Struktur der Angaben über die Qualitätserhöhung.

12. Sender (STREAMING SERVER) zur Versendung von Informationen, mit
Mitteln zum Versenden von Basis-Informationen (BASE), Mitteln zum Versenden eines oder mehrerer Pakete (PACKET 2, PACKET 3) mit die Basis-Informationen (BASE) ergänzenden Informationen, welche bei Dekodierung durch einen Empfänger (MANE, MS, LAPTOP, PDA) die Qualität der Basis-Informationen (BASE) erhöhen,
Mitteln zum Einfügen in die Pakete (PACKET 2, PACKET 3) von mindestens einem Feld (L, T, S, B; L, ID) mit Angaben darüber, auf welche Weise die ergänzenden Informationen des jeweiligen Paketes (PACKET 2, PACKET 3) die Qualität der Basis-Informationen (BASE) erhöhen, so dass das mindestens eine Feld (L, T, S, B; L, ID) unabhängig von den ergänzenden Informationen des jeweiligen Paketes (PACKET 2, PACKET 3) auslesbar ist,
**gekennzeichnet durch**
Mittel zum Versenden von Informationen in einem separaten Feld (L) des mindestens einen Feldes (L, T, S, B; L, ID), getrennt von den Angaben über die Qualitätserhöhung, welche signalisiert, welche von mehreren möglichen Gruppierungen für die ergänzenden Informationen verwendet wird, und gleichzeitig eine bestimmte Struktur der Angaben über die Qualitätserhöhung.

13. Empfänger (MANE) zum Empfangen von Informationen, mit
Mitteln zum Empfangen von Basis-Informationen (BASE), Mitteln zum Empfangen eines oder mehrerer Pakete (PACKET 2, PACKET 3) mit die Basis-Informationen (BASE) ergänzenden Informationen, welche bei Dekodierung die Qualität der Basis-Informationen (BASE) erhöhen, wobei die Pakete (PACKET 2, PACKET 3) mindestens ein Feld (L, T, S, B; L, ID) mit Angaben darüber enthalten, auf welche Weise die ergänzenden Informationen des jeweiligen Paketes (PACKET 2, PACKET 3) die Qualität der Basis-Informationen (BASE) erhöhen, wobei das mindestens eine Feld (L, T, S, B; L, ID) unabhängig von den ergänzenden Informationen des jeweiligen Paketes (PACKET 2, PACKET 3) auszulesen ist, Mitteln zum Entscheiden hinsichtlich von einem oder mehreren der Pakete (PACKET 2, PACKET 3) unter Verwendung der Angaben, ob das jeweilige Paket (PACKET 2, PACKET 3) an einen anderen Empfänger (MS, LAPTOP, PDA) weiterzuleiten ist,
**gekennzeichnet durch**
Mittel zum Empfangen von Informationen in einem separaten Feld (L) des mindestens einen Feldes (L, T, S, B; L, ID), getrennt von den Angaben über die Qualitätserhöhung, welche signalisiert, welche von mehreren möglichen Gruppierungen für die ergänzenden Informationen verwendet wird, und gleichzeitig eine bestimmte Struktur der Angaben über die Qualitätserhöhung.

14. Empfänger (MS, LAPTOP, PDA) zum Empfangen von Informationen, mit
• Mitteln zum Empfangen von Basis-Informationen (BASE),
• Mitteln zum Empfangen eines oder mehrerer Pakete (PACKET 2, PACKET 3) mit die Basis-Informationen (BASE) ergänzenden Informationen, welche bei Dekodierung die Qualität der Basis-Informationen (BASE) erhöhen, wobei die Pakete (PACKET 2, PACKET 3) mindestens ein Feld (L, T, S, B; L, ID) mit Angaben darüber enthalten, auf welche Weise die ergänzenden Informationen des jeweiligen Paketes (PACKET 2, PACKET 3) die Qualität der Basis-Informationen (BASE) erhöhen, wobei das mindestens eine Feld (L, T, S, B; L, ID) unabhängig von den ergänzenden Informationen des jeweiligen Paketes (PACKET 2, PACKET 3) auszulesen ist,
• Mitteln zum Entscheiden hinsichtlich von einem oder mehreren der Pakete (PACKET 2, PACKET 3) unter Verwendung der Angaben, ob das jeweilige Paket (PACKET 2, PACKET 3) zu dekodieren ist,
**gekennzeichnet durch**
Mittel zum Empfangen von Informationen in einem separaten Feld (L) des mindestens einen Feldes (L, T, S, B; L, ID), getrennt von den Angaben über die Qualitätserhöhung, welche signalisiert, welche von mehreren möglichen Gruppierungen für die ergänzenden Informationen verwendet wird, und gleichzeitig eine bestimmte Struktur der Angaben über die Qualitätserhöhung.

## Claims

1. Method for the transmission of information, in which
• basic information (BASE) is transmitted,
• one or more packets (PACKET 2, PACKET 3) comprising information complementing the basic information (BASE) are transmitted which, upon decoding by a receiver (MANE, MS, LAPTOP, PDA), increase the quality of the basic information (BASE),
• the packets (PACKET 2, PACKET 3) contain at least one field (L, T, S, B; L, ID) comprising details about how the complementing information of the respective packet (PACKET 2, PACKET 3) increases the quality of the basic information (BASE),
wherein the at least one field (L, T, S, B; L, ID) can be read out independently of the complementing information of the respective packet (PACKET 2, PACKET 3).
**characterised in that** information is transmitted in a separate field (L) of the at least one field (L, T, S, B; L, ID) separately from the details about the increase in quality, which information signalling which of a plurality of possible groupings is used for the complementing information, and simultaneously a defined structure of the details about the increase in quality.

2. Method according to claim 1, wherein
the information about the grouping upon connection establishment is transmitted and the corresponding grouping is used for the subsequent transmission of the complementing information.

3. Method according to claim 1, wherein
the information is contained in the at least one field (L, T, S, B; L, ID).

4. Method according to one of claims 1 to 3, wherein
information about the configuration of the at least one field (L, T, S, B; L, ID) is transmitted.

5. Method according to one of claims 1 to 4, wherein
the details of a packet (PACKET 2, PACKET 3) are incorporated in a decision as to whether the packet (PACKET 2, PACKET 3) is to be forwarded to a receiver (MS, LAPTOP, PDA).

6. Method according to one of claims 1 to 4, wherein
the details of a packet (PACKET 2, PACKET 3) are incorporated in a decision as to whether the packet (PACKET 2, PACKET 3) is to be decoded by a receiver (MS, LAPTOP, PDA).

7. Method according to one of claims 1 to 6, wherein
the details show that the complementing information increases the quality of the basic information (BASE) by increasing the temporal resolution (T) and/or increasing the spatial resolution (S) and/or increasing the signal-to-noise ratio (SNR).

8. Method according to one of claims 1 to 7, wherein
the at least one field (L, T, S, B; L, ID) is an integral part of a packet header (EXTENSION HEADER).

9. Method according to one of claims 1 to 8, wherein
the basic information (BASE) is video information.

10. Method for the receiving and processing of information by a receiver (MANE), wherein
basic information (BASE) is received,
one or more packets (PACKET 2, PACKET 3) comprising information complementing the basic information (BASE) are received which, upon decoding, increase the quality of the basic information (BASE),
the packets (PACKET 2, PACKET 3) contain at least one field (L, T, S, B; L, ID) comprising details about how the complementing information of the respective packet (PACKET 2, PACKET 3) increases the quality of the basic information (BASE), wherein the at least one field (L, T, S, B; L, ID) is read out independently of the complementing information of the respective packet (PACKET 2, PACKET 3), and
the details of a packet (PACKET 2, PACKET 3) are incorporated by the receiver (MANE) in a decision as to whether the packet (PACKET 2, PACKET 3) is to be forwarded to a different receiver (MS, LAPTOP, PDA),
**characterised in that**
information is received in a separate field (L) of the at least one field (L, T, S, B; L, ID) separately from the details about the increase in quality, which information signalling which of a plurality of possible groupings is used for the complementing information, and simultaneously a defined structure of the details about the increase in quality.

11. Method for the receiving and processing of information by a receiver (MS, LAPTOP, PDA), wherein
basic information (BASE) is received,
one or more packets (PACKET 2, PACKET 3) comprising information complementing the basic information (BASE) are received which, upon decoding, increase the quality of the basic information (BASE),
the packets (PACKET 2, PACKET 3) contain at least one field (L, T, S, B; L, ID) comprising details about how the complementing information of the respective packet (PACKET 2, PACKET 3) increases the quality of the basic information (BASE), wherein the at least one field (L, T, S, B; L, ID) is read out independently of the complementing information of the respective packet (PACKET 2, PACKET 3),
and
the details of a packet (PACKET 2, PACKET 3) are incorporated by the receiver (MS, LAPTOP, PDA) in a decision as to whether the packet (PACKET 2, PACKET 3) is to be decoded by the receiver (MS, LAPTOP, PDA), **characterised in that**
information is received in a separate field (L) of the at least one field (L, T, S, B; L, ID) separately from the details about the increase in quality, which information signalling which of a plurality of possible groupings is used for the complementing information, and simultaneously a defined structure of the details about the increase in quality.

12. Transmitter (STREAMING SERVER) for transmitting information, comprising
means for transmitting basic information (BASE),
means for transmitting one or more packets (PACKET 2, PACKET 3) comprising information complementing the basic information (BASE) which, upon decoding by a receiver (MANE, MS, LAPTOP, PDA), increases the quality of the basic information (BASE),
means for inserting into the packets (PACKET 2, PACKET 3) at least one field (L, T, S, B; L, ID) comprising details about how the complementing information of the respective packet (PACKET 2, PACKET 3) increases the quality of the basic information (BASE), such that the at least one field (L, T, S, B; L, ID) can be read out independently of the complementing information of the respective packet (PACKET 2, PACKET 3),
**characterised by**
means for transmitting information in a separate field (L) of the at least one field (L, T, S, B; L, ID), separately from the details about the increase in quality, which information signalling which of a plurality of possible groupings is used for the complementing information, and simultaneously a defined structure of the details about the increase in quality.

13. Receiver (MANE) for receiving information, comprising
means for receiving basic information (BASE),
means for receiving one or more packets (PACKET 2, PACKET 3) comprising information complementing the basic information (BASE) which upon decoding, increases the quality of the basic information (BASE), wherein the packets (PACKET 2, PACKET 3) contain at least one field (L, T, S, B; L, ID) comprising details about how the complementing information of the respective packet (PACKET 2, PACKET 3) increases the quality of the basic information (BASE), wherein the at least one field (L, T, S, B; L, ID) is to be read out independently of the complementing information of the respective packet (PACKET 2, PACKET 3) means for deciding with regard to one or more of the packets (PACKET 2, PACKET 3) using the details whether the respective packet (PACKET 2, PACKET 3) is to be forwarded to a different receiver (MS, LAPTOP, PDA), **characterised by**
means for receiving information in a separate field (L) of the at least one field (L, T, S, B; L, ID), separately from the details about the increase in quality, which information signalling which of a plurality of possible groupings is used for the complementing information, and simultaneously a defined structure of the details about the increase in quality.

14. Receiver (MS, LAPTOP, PDA) for receiving information, comprising
• means for receiving basic information (BASE),
• means for receiving one or more packets (PACKET 2, PACKET 3) comprising information complementing the basic information (BASE) which, upon decoding, increases the quality of the basic information (BASE), wherein the packets (PACKET 2, PACKET 3) contain at least one field (L, T, S, B; L, ID) comprising details about how the complementing information of the respective packet (PACKET 2, PACKET 3) increases the quality of the basic information (BASE), wherein the at least one field (L, T, S, B; L, ID) is to be read out independently of the complementing information of the respective packet (PACKET 2, PACKET 3),
• means for deciding with regard to one or more of the packets (PACKET 2, PACKET 3) using the details as to whether the respective packet (PACKET 2, PACKET 3) is to be decoded,
**characterised by**
means for receiving information in a separate field (L) of the at least one field (L, T, S, B; L, ID), separately from the details about the increase in quality, which information signalling which of a plurality of possible groupings is used for the complementing information, and simultaneously a defined structure of the details about the increase in quality.

## Revendications

1. Procédé de transmission d'informations, selon lequel :
- des informations de base (BASE) sont émises ;
- un ou plusieurs paquets (PACKET 2, PACKET 3) sont émis avec des informations qui complètent les informations de base (BASE) et qui augmentent la qualité des informations de base (BASE) lors du décodage par un récepteur (MANE, MS, LAPTOP, PDA) ;
- les paquets (PACKET 2, PACKET 3) contiennent au moins un champ (L, T, S, B ; L, ID) avec des indications sur la manière dont les informations complémentaires du paquet respectif (PACKET 2, PACKET 3) augmentent la qualité des informations de base (BASE),
l'au moins un champ (L, T, S, B ; L, ID) pouvant être lu indépendamment des informations complémentaires du paquet respectif (PACKET 2, PACKET 3),
**caractérisé en ce que** sont envoyées, dans un champ séparé (L) de l'au moins un champ (L, T, S, B ; L, ID), de manière séparée des indications relatives à l'augmentation de la qualité, des informations qui signalent lequel de plusieurs groupements possibles est utilisé pour les informations complémentaires, et en même temps une structure déterminée des indications relatives à l'augmentation de la qualité.

2. Procédé selon la revendication 1, selon lequel les informations relatives au groupement sont émises lors d'un établissement de liaison et le groupement correspondant est utilisé pour la transmission suivante des informations complémentaires.

3. Procédé selon la revendication 1, selon lequel les informations sont contenues dans l'au moins un champ (L, T, S, B ; L, ID).

4. Procédé selon l'une des revendications 1 à 3, selon lequel sont émises des informations sur l'architecture de l'au moins un champ (L, T, S, B ; L, ID).

5. Procédé selon l'une des revendications 1 à 4, selon lequel les indications d'un paquet (PACKET 2, PACKET 3) sont intégrées dans une décision établissant si le paquet (PACKET 2, PACKET 3) doit être retransmis à un récepteur (MS, LAPTOP, PDA).

6. Procédé selon l'une des revendications 1 à 4, selon lequel les indications d'un paquet (PACKET 2, PACKET 3) sont intégrées dans une décision établissant si le paquet (PACKET 2, PACKET 3) doit être décodé par un récepteur (MS, LAPTOP, PDA).

7. Procédé selon l'une des revendications 1 à 6, selon lequel les indications indiquent que les informations complémentaires augmentent la qualité des informations de base (BASE) en augmentant la résolution temporelle (T) et/ou en augmentant la résolution locale (S) et/ou en augmentant le rapport signal / bruit (SNR).

8. Procédé selon l'une des revendications 1 à 7, selon lequel l'au moins un champ (L, T, S, B ; L, ID) fait partie d'un en-tête de paquet (EXTENSION HEADER).

9. Procédé selon l'une des revendications 1 à 8, selon lequel les informations de base (BASE) sont des informations vidéo.

10. Procédé de réception et de traitement d'informations par un récepteur (MANE), selon lequel .
- des informations de base (BASE) sont reçues ;
- un ou plusieurs paquets (PACKET 2, PACKET 3) sont reçus avec des informations qui complètent les informations de base (BASE) et qui augmentent la qualité des informations de base (BASE) lors du décodage ;
- les paquets (PACKET 2, PACKET 3) contiennent au moins un champ (L, T, S, B ; L, ID) avec des indications sur la manière dont les informations complémentaires du paquet respectif (PACKET 2, PACKET 3) augmentent la qualité des informations de base (BASE), l'au moins un champ (L, T, S, B ; L, ID) étant lu indépendamment des informations complémentaires du paquet respectif (PACKET 2, PACKET 3) ; et
- les indications d'un paquet (PACKET 2, PACKET 3) sont intégrées par le récepteur (MANE) dans une décision établissant si le paquet (PACKET 2, PACKET 3) doit être retransmis à un autre récepteur (MS, LAPTOP, PDA) ;
**caractérisé en ce que** sont reçues, dans un champ séparé (L) de l'au moins un champ (L, T, S, B ; L, ID), de manière séparée des indications relatives à l'augmentation de la qualité, des informations qui signalent lequel de plusieurs groupements possibles est utilisé pour les informations complémentaires, et en même temps une structure déterminée des indications relatives à l'augmentation de la qualité.

11. Procédé de réception et de traitement d'informations par un récepteur (MS, LAPTOP, PDA), selon lequel :
des informations de base (BASE) sont reçues ;
un ou plusieurs paquets (PACKET 2, PACKET 3) sont reçus avec des informations qui complètent les informations de base (BASE) et qui augmentent la qualité des informations de base (BASE) lors du décodage ;
les paquets (PACKET 2, PACKET 3) contiennent au moins un champ (L, T, S, B ; L, ID) avec des indications sur la manière dont les informations complémentaires du paquet respectif (PACKET 2, PACKET 3) augmentent la qualité des informations de base (BASE), l'au moins un champ (L, T, S, B ; L, ID) étant lu indépendamment des informations complémentaires du paquet respectif (PACKET 2, PACKET 3) ; et
les indications d'un paquet (PACKET 2, PACKET 3) sont intégrées par le récepteur (MS, LAPTOP, PDA) dans une décision établissant si le paquet (PACKET 2, PACKET 3) doit être décodé par le récepteur (MS, LAPTOP, PDA) ;
**caractérisé en ce que** sont reçues, dans un champ séparé (L) de l'au moins un champ (L, T, S, B ; L, ID), de manière séparée des indications relatives à l'augmentation de la qualité, des informations qui signalent lequel de plusieurs groupements possibles est utilisé pour les informations complémentaires, et en même temps une structure déterminée des indications relatives à l'augmentation de la qualité.

12. Émetteur (STREAMING SERVER) destiné à envoyer des informations, comportant :
des moyens pour envoyer des informations de base (BASE) ;
des moyens pour envoyer un ou plusieurs paquets (PACKET 2, PACKET 3) avec des informations qui complètent les informations de base (BASE) et qui augmentent la qualité des informations de base (BASE) lors du décodage par un récepteur (MANE, MS, LAPTOP, PDA) ;
des moyens pour insérer dans les paquets (PACKET 2, PACKET 3) au moins un champ (L, T, S, B ; L, ID) avec des indications sur la manière dont les informations complémentaires du paquet respectif (PACKET 2, PACKET 3) augmentent la qualité des informations de base (BASE), de sorte que l'au moins un champ (L, T, S, B ; L, ID) peut être lu indépendamment des informations complémentaires du paquet respectif (PACKET 2, PACKET 3),
**caractérisé par** des moyens pour envoyer, dans un champ séparé (L) de l'au moins un champ (L, T, S, B ; L, ID), de manière séparée des indications relatives à l'augmentation de la qualité, des informations qui signalent lequel de plusieurs groupements possibles est utilisé pour les informations complémentaires, et en même temps une structure déterminée des indications relatives à l'augmentation de la qualité.

13. Récepteur (MANE) destiné à recevoir des informations, comportant :
des moyens pour recevoir des informations de base (BASE) ;
des moyens pour recevoir un ou plusieurs paquets (PACKET 2, PACKET 3) avec des informations qui complètent les informations de base (BASE) et qui augmentent la qualité des informations de base (BASE) lors du décodage, les paquets (PACKET 2, PACKET 3) contenant au moins un champ (L, T, S, B ; L, ID) avec des indications sur la manière dont les informations complémentaires du paquet respectif (PACKET 2, PACKET 3) augmentent la qualité des informations de base (BASE), l'au moins un champ (L, T, S, B ; L, ID) devant être lu indépendamment des informations complémentaires du paquet respectif (PACKET 2, PACKET 3) ;
des moyens pour décider, s'agissant d'un ou de plusieurs des paquets (PACKET 2, PACKET 3) et en utilisant les indications, si le paquet respectif (PACKET 2, PACKET 3) doit être retransmis à un autre récepteur (MS, LAPTOP, PDA) ;
**caractérisé par** des moyens pour recevoir, dans un champ séparé (L) de l'au moins un champ (L, T, S, B ; L, ID), de manière séparée des indications relatives à l'augmentation de la qualité, des informations qui signalent lequel de plusieurs groupements possibles est utilisé pour les informations complémentaires, et en même temps une structure déterminée des indications relatives à l'augmentation de la qualité.

14. Récepteur (MS, LAPTOP, PDA) destiné à recevoir des informations, comportant :
- des moyens pour recevoir des informations de base (BASE) ;
- des moyens pour recevoir un ou plusieurs paquets (PACKET 2, PACKET 3) avec des informations qui complètent les informations de base (BASE) et qui augmentent la qualité des informations de base (BASE) lors du décodage, les paquets (PACKET 2, PACKET 3) contenant au moins un champ (L, T, S, B ; L, ID) avec des indications sur la manière dont les informations complémentaires du paquet respectif (PACKET 2, PACKET 3) augmentent la qualité des informations de base (BASE), l'au moins un champ (L, T, S, B ; L, ID) devant être lu indépendamment des informations complémentaires du paquet respectif (PACKET 2, PACKET 3) ;
- des moyens pour décider, s'agissant d'un ou de plusieurs des paquets (PACKET 2, PACKET 3) et en utilisant les indications, si le paquet respectif (PACKET 2, PACKET 3) doit être décodé ;
**caractérisé par** des moyens pour recevoir, dans un champ séparé (L) de l'au moins un champ (L, T, S, B ; L, ID), de manière séparée des indications relatives à l'augmentation de la qualité, des informations qui signalent lequel de plusieurs groupements possibles est utilisé pour les informations complémentaires, et en même temps une structure déterminée des indications relatives à l'augmentation de la qualité.
